# EUROPÄISCHE PATENTSCHRIFT

(11) **EP 0 621 836 B1**
(45) Veröffentlichungstag und Bekanntmachung des Hinweises auf die Patenterteilung: **05.03.1997**
(21) Anmeldenummer: 94901795.8
(22) Anmeldetag: 13.11.1993
(51) Int. Cl.: B60T 8/40, F04B 53/04

(54) **TAUCHDICHTES ABS/ASR-PUMPENAGGREGAT MIT RÜCKSCHLAGVENTIL**
IMMERSION-PROOF ABS/DRIVE SLIP CONTROL PUMPING ASSEMBLY WITH CHECK VALVE
ENSEMBLE POMPE ABS/ANTIPATINAGE A L'ACCELERATION ETANCHE A L'IMMERSION AVEC SOUPAPE DE NON-RETOUR

(30) Priorität: 24.11.1992 DE 4239361
(43) Veröffentlichungstag der Anmeldung: 02.11.1994
(73) Patentinhaber: ITT Automotive Europe GmbH, 60488 Frankfurt am Main (DE)
(72) Erfinder: BENDEL, Klaus, D-65830 Kriftel (DE); UHLMER, Jürgen, D-63768 Hösbach (DE); EISER, Armin, D-35519 Rockenberg (DE)
(86) Internationale Anmeldenummer: EP9303185
(87) Internationale Veröffentlichungsnummer: WO9412375

(56) Entgegenhaltungen:
- DE-A- 4 027 848
- DE-U- 9 206 567
- FR-A- 2 152 925
- GB-A- 2 057 613
- GB-A- 2 244 527

## Beschreibung

Die Erfindung betrifft ein Pumpenaggregat für ein geregeltes Bremssystem für Kraftfahrzeuge, wie es beispielsweise in der DE-A-40 27 848 beschrieben ist. Bei derartigen Pumpen münden Einlaßbohrungen und Auslaßbohrungen in Zylinder, wobei über die sich in Längsrichtung der Zylinder bewegenden Kolben ventilgesteuert Druckmittel von den Einlaßbohrungen zu den Auslaßbohrungen gefördert wird. Die Kolben werden über einen Exzenter von einem Elektromotor angetrieben wobei der Antriebsraum gegenüber dem Verdichtungsraum durch die Dichtungen der Kolben abgedichtet ist.

Gleichwohl werden geringe Druckmittelmengen über die Dichtungen durch die sich bewegende Oberfläche der Kolben in den den Exzenter umgebenden Raum geschleppt. In diesem Raum herrscht in der Regel Umgebungsdruck. Dennoch kann es durch das Einschleppen der geringen Druckmittelmengen langfristig zu einem Stau von Druckmittel in dem Umgebungsraum des Exzenters kommen, wobei die dann in das gesammelte Druckmittel eintauchenden Kolbenenden für Druckstöße sorgen. Durch diese Druckstöße kann Druckmittel in den Innenraum des antreibenden Elektromotors gepreßt werden und diesen zerstören.

Um hier Abhilfe zu schaffen wurde vorgeschlagen, eine Bohrung von dem Umgebungsraum des Exzenters durch das Pumpengehäuse zu schaffen, um dem eingeschleppten Druckmittel einen Auslaßweg zu geben. Ein derartiger Verbindungsweg ist aber dann nachteilig, wenn das Pumpenaggregat vergleichsweise niedrig in bezug auf die Fahrbahnoberfläche im Kraftfahrzeug angeordnet ist. In diesen Fällen muß damit gerechnet werden, daß über den Fahrweg aufgenommene Flüssigkeit in den Verbindungsweg und dann in den Umgebungsraum des Exzenters gelangt. Die hierdurch eintretende Verschmutzung kann die sehr fein bearbeiteten Bearbeitungsflächen des Exzenters und der Kolben schnell zerstören. Desweiteren führt der Flüssigkeitseintritt zur Zerstörung des Elektromotors durch Kurzschluß. Dies gilt insbesondere für Fahrzeuge, an die die Forderung gestellt wird, relativ hochstehende Wasserflächen durchfahren zu können.

Der Erfindung geht daher aus von einem Pumpenaggregat, der sich aus dem Oberbegriff des Hauptanspruchs ergebenden Gattung. Ein derartiges Pumpenaggregat ist beispielsweise aus der FR-A-2 152 925 bekannt. Nachteilig an diesem Pumpenaggregat ist anzusehen, daß hier eine Verbindung zum Hauptbremszylinderreservoir notwendig ist.

Aufgabe der Erfindung ist es, die obenerwähnten Nachteile zu beseitigen und ein derartiges Pumpenaggregat mit einfachen Mitteln zuverlässig tauchdicht auszugestalten.

Die Aufgabe wird erfindungsgemäß durch die sich aus dem kennzeichnenden Teil des Hauptanspruchs ergebende Merkmaiskombination gelöst.

Auf diese Weise ist es möglich, dem sich in dem Umgebungsraum gesammelten Druckmittel einen Auslaß aus dem Pumpengehäuse zu verschaffen und gleichzeitig das Eindringen umgebender Flüssigkeit in das Pumpengehäuse zu verhindern.

Um das Anstauen verschleppter Druckmittelmengen in den Umgebungsraum des Exzenters sicher zu verhindern empfiehlt sich in vorteilhafter Weiterbildung der Erfindung die Anwendung der Merkmalskombination nach Anspruch 2. Auf diese Weise wird durch die Ansammlung des Druckmittels selbst die Öffnung des Rückschlagventils erzwungen.

Eine besonders sichere Ausführung des Rückschlagventils wird durch einen Aufbau gemäß der Merkmale nach Anspruch 3 erreicht. Dadurch öffnet das Ventil unter Wirkung der auf die gesammelte Druckmittelmenge einwirkenden Schwerkraft, so daß es gar nicht zu einem Aufstauen der gesammelten Druckmittelmenge kommen kann.

Um den Einbau des Rückschlagventils zu erleichtern und die Tauchtüchtigkeit eines Fahrzeugs an die jeweiligen Anforderungen besser anpassen zu können, empfiehlt sich die Verwendung der Merkmale nach Anspruch 4. Dabei kann der Ventilkörper vorteilhafterweise aus Kunststoff bestehen.

Einen besonders einfachen Aufbau für das Rückschlagventil ergibt sich durch die Merkmale nach Anspruch 5. Hierbei werden nicht besondere Mittel zur Erzeugung der Vorspannung angewendet, sondern die Einbausituation der Dichtung im Ventilgehäuse und die charakteristischen Eigenschaften dieser Dichtung selbst sorgt für den hinreichenden Anpreßdruck auf den Dichtsitz.

Eine weitere Verbesserung gegen Eindringen von Feuchtigkeit und Schmutz ergibt sich aus der Merkmalskombination nach Anspruch 7. Hierbei wird eine, im wesentlichen in Einbaulage waagerecht verlaufende Befestigungsbohrung im Pumpengehäuse gleichzeitig als Ausgangsöffnung für den Verbindungsweg mit ausgenutzt. Es ergibt sich hierdurch für den Verbindungsweg ein relativ schmaler winklig gehender Verlauf, wodurch eine Art Labyrinth gebildet wird, was zusätzlich zur Verbesserung der Erfindung durch die Vermeidung des direkten Eindringens von Spritzwasser beiträgt.

Ein Ausführungsbeispiel der Erfindung wird nachfolgend anhand der Zeichnung erläutert. Darin zeigt:
- Fig. 1: einen Ausschnitt aus einem erfindungsgemäßen Pumpenaggregat,
- Fig. 2: in vergrößerter Darstellung das Rückschlagventil nach Fig. 1,
- Fig. 3: eine geänderte Ausführungsform des Rückschlagventils nach Fig. 2.

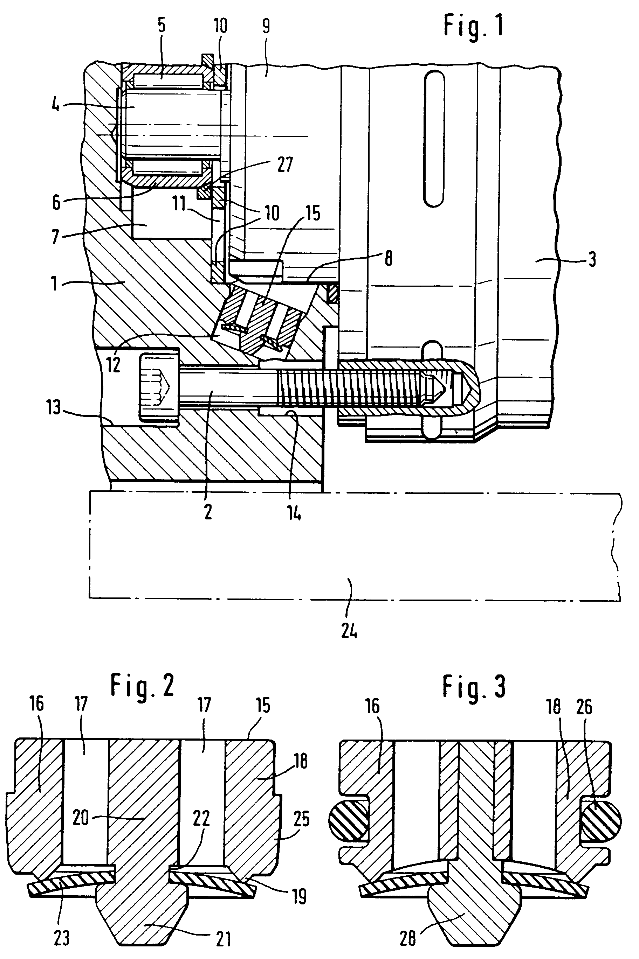

In Figur 1 ist ein Pumpengehäuse 1 mittels Verbindungsschrauben 2 mit dem Motorgehäuse 3 eines Elektromotors verbunden. Ein Exzenter 4 ragt aus dem Motorgehäuse 3 in den Innenraum 7 des Pumpengehäuses 1. Auf dem Exzenter 4 sitzt über ein Wälzlager 5 drehgelagert ein gegenüber dem Pumpengehäuse 1 im wesentlichen drehfester Lageraußenring 6, der aufgrund der Wirkung des Exzenters 4 eine exzentrische Bewegung durchführt. Der Betätigungsring wirkt auf die Füße von in der Zeichnung nicht erkennbaren Kolben ein, welche in senkrecht zur Zeichenebene angeordneten Zylindern im Pumpengehäuse 1 geführt sind. Einzelheiten hierzu können aus der schon genannten DE-A-40 27 848 entnommen werden. Der Lageraußenring 6 und damit der Exzenter 4 bewegen sich in einem Umgebungsraum 7 im Inneren des Pumpengehäuses 1, welcher den Exzenter 4 umgibt.

In Figur 1 ist weiterhin eine zylinderförmige Aufnahmeöffnung 8 zu erkennen, welche einen in die Pumpe ragenden Vorderabschnitt 9 des Elektromotors aufnimmt. Am unteren Ende des Lageraußenrings 6 erkennt man im Schnitt einen Rückholring 27, welcher mit den beiden Kolben verbunden ist und diese aus ihrer äußersten Lage in Richtung Exzenterachse zurückholt. Für die Erfindung ist es wichtig, daß in der Einbaulage das Pumpengehäuse derart angeordnet ist, daß die gezeigte Verbindungsschraube 2 mit der Austrittsöffnung 14 am unteren Ende des Gehäuses liegt. Dementsprechend bewegen sich die Kolben in horizontaler Richtung senkrecht zum Betrachter.

Das von den sich in den Zylindern bewegenden Kolben in Richtung zum Exzenter geschleppte Druckmittel sammelt sich am unteren Ende des Raumes 7. Von dort kann es durch Öffnungen 11 in der Anlaufscheibe 10 in die durch den angflanschten Elektromotor 3 geschlossene Aufnahmeöffnung 8 treten. Die Aufnahmeöffnung 8 ist über eine schräge Verbindungsbohrung 12 mit einer Stufenbohrung 13 verbunden, welche in horizontaler Richtung verläuft. Die Stufenbohrung 13 besitzt einen Führungsabschnitt zur Führung der Verbindungsschraube 2 und zumindest einen gegenüber diesem erweiterten Ausschnitt 14, der zusammen mit der Verbindungsschraube 2 einen ringförmigen Raum schafft.

In die Verbindungsbohrung 12 ist ein Rückschlagventil 15 eingesetzt, welches im Zusammenhang mit Figur 2 näher beschrieben wird. Auf diese Weise ergibt sich für das in den Umgebungsraum 7 eintretende Druckmittel ein Verbindungsweg zu der äußeren Umgebung der Pumpe, der über die Durchtrittsöffnung 11, die Aufnahmeöffnung 8, das Ventil 15 in der Verbindungsbohrung 12 und den Führungsabschnitt 14 in dem Gehäuse 1 verläuft. Unterhalb des Gehäuses kann, wie durch Strichlinien angedeutet, ein Ventilblock 24 angeordnet sein, welcher zusätzlich noch das Eindringen von Spritzwasser in den Verbindungsweg im Pumpengehäuse 1 erschwert.

In Figur 2 ist das Rückschlagventil 15 gezeigt. Dabei sind in ein Ventilgehäuse 16 mehrere Durchtrittskanäle 17 eingebracht. Der äußere ringförmige Bereich 18 des Ventilgehäuses 16 weist einen umlaufenden vorspringenden Wulst 19 auf, dessen äußere Kante den feststehenden Ventilsitz bildet. Der mittlere Bereich 20 des Ventilgehäuses 16 trägt einen pilzförmigen Ansatz 21, an dessen gehäuseseitigem Ende eine Nut 22 angebracht ist. In die Nut greift der innere Rand einer Dichtung 23 aus Gummi ein, der mit seinem äußeren Bereich ringförmig auf der Dichtkante des Wulstes 19 aufsitzt. Dabei ist die Lage der Nut 22 gegenüber der Dichtkante am Gehäuse derart versetzt, daß die Dichtung 23 gewölbt wird und somit unter Vorspannung an der Dichtkante anliegt. Die Höhe der Vorspannung ist durch die Stärke der Wölbung, die Materialbeschaffenheit des Gummis und die Dicke der Dichtung derart vorbestimmt, daß der Dichtring unter dem Gewicht einer hinreichenden Menge angesammelten Druckmittels von der Dichtkante abhebt und dieses abfließen kann. Nach dem Abfluß des Druckmittels schließt sich das Ventil wieder aufgrund der Elastizität der Dichtung 23 wieder.

Figur 2 zeigt einen ringförmigen Vorsprung 25, der sich nur über einen Teil der Höhe des Gehäuses 16 erstreckt. Aufgabe dieses Vorsprungs ist es, das dichtende Einpressen des Gehäuses 15 in die Verbindungsbohrung 12 des Pumpengehäuses 1 in Figur 1 zu erleichtern und somit die Außenkontur des Dichtungsgehäuses 16 besser an die Mantelfläche der Verbindungsbohrung 12 anzupassen.

Figur 3 zeigt eine modifizierte Ausführungsform, die sich von Figur 2 zum einen dadurch unterscheidet, daß statt des umlaufenden Ansatzes 25 ein O-Ring 26 aus Gummi in einer entsprechenden Nut in dem Gehäuse 16 angeordnet ist.

Zum anderen besteht das Ventilgehäuse 16 aus fertigungstechnischen Gründen aus zwei Teilen, nämlich dem äußeren ringförmigen Bereich 18 und einem Ventilzapfen 28, der in das Ventilgehäuse 16 eingepreßt wird.

## Patentansprüche

1. Pumpenaggregat mit einer von einem Elektromotor mittels eines Exzenters (4) angetriebenen Kolbenpumpe für ein geregeltes Bremssystem für Kraftfahrzeuge, wobei ein Verbindungsweg (12) zwischem einem den Exzenter (4) unmittelbar umgebenden Raum (7) und einer in Einbaulage der Pumpe (1) unterhalb dieses Raumes (7) liegenden Austrittsöffnung (14) im Pumpengehäuse (1) vorgesehen ist dadurch **gekennzeichnet,** daß die Austrittsöffnung (14) in die freie Atmosphäre führt und daß in den Verbindungsweg (12) ein zur Austrittsöffnung (14) hin öffnendes Rückschlagventil (15) angeordnet ist.

2. Pumpenaggregat nach Anspruch 1, dadurch **gekennzeichnet,** daß das Rückschlagventil (15) derart dimensioniert ist, daß es aufgrund der von der bezüglich der Einbaulage der Pumpe (1) oberhalb einer beweglichen Dichtung (23) angesammelten Druckmittelmenge ausgeübten Last öffnet.

3. Pumpenaggregat nach Anspruch 2, dadurch **gekennzeichnet,** daß es aufgrund der von der Druckmittelmenge ausgeübten Schwerkraft öffnet.

4. Pumpenaggregat nach einem der Ansprüche 1 bis 3, dadurch **gekennzeichnet,** daß das Rückschlagventil (15) eine in den Verbindungsweg (12) eingesetzte komplette Baueinheit ist, bei der ein mit einer Dichtkante (19) versehener Ventilkörper (16), vorzugsweise aus Kunststoff, einer Dichtung (23) trägt, welche unter Vorspannung mit einer umlaufenden Dichtfläche an der Dichtkante (19) anliegt.

5. Pumpenaggregat nach Anspruch 4, dadurch **gekennzeichnet,** daß die Vorspannung durch Verwölbung der Dichtung (23) aufgebracht wird, indem die Anlageebene der Dichtung (23) an der Dichtkante (19) gegenüber der Befestigung des Dichtrings (22) am Ventilkörper (16) in Auslaßrichtung des Druckmittels versetzt ist.

6. Pumpenaggregat nach einem der Ansprüche 1 bis 5, dadurch **gekennzeichnet,** daß der Ventilkörper (16) in den Verbindungsweg (12) dichtend eingepreßt oder über einen umlaufenden Dichtring (26) in den Verbindungsweg (12) dichtend eingesetzt ist.

7. Pumpenaggregat nach einem der Ansprüche 1 bis 6, dadurch **gekennzeichnet,** daß die Austrittsöffnung (14) des Verbindungsweges (7,11,8,12,14) eine zur Aufnahme einer Befestigungsschraube (2) dienende, in Einbaulage des Pumpenaggregats im wesentlichen horizontal verlaufende Durchgangsbohrung (13) im Pumpengehäuse (1) ist.

## Claims

1. A pump assembly including a piston pump driven by an electric motor through an eccentric (4) and adapted for use in a controlled brake system for automotive vehicles, wherein a connecting conduit (12) is provided between a space (7) directly surrounding the eccentric (4) and an exit aperture (14) in the pump housing (1) placed beneath this space (7) in the installation position of the pump (1),
**characterized** in that the exit aperture (14) opens into the ambient space and in that a non-return valve (15) opening towards the exit aperture (14) is arranged in the connecting conduit (12).

2. A pump assembly as claimed in claim 1,
**characterized** in that the non-return valve (15) is dimensioned such that it opens in response to the load exerted by a quantity of pressure fluid which accumulated upstream of the movable seal (23).

3. A pump assembly as claimed in claim 2,
**characterized** in that it opens in response to the weight exerted by the quantity of pressure fluid.

4. A pump assembly as claimed in any one of the claims 1 to 3,
**characterized** in that the non-return valve (15) is a complete unit inserted into the connecting conduit (12), wherein a valve member (16), preferably made of plastic having a sealing edge (19), carries a seal (23) which, under preload, abuts with a circumferential sealing surface on the sealing edge (19).

5. A pump assembly as claimed in claim 4,
**characterized** in that the preload is generated by the curving of the seal (23) because the plane of abutment of the seal (23) with the sealing edge (19) is offset in the direction of outlet of the pressure fluid with respect to the attachment of the ring seal (22) to the valve member (16).

6. A pump assembly as claimed in any one of the claims 1 to 5,
**characterized** in that the valve member (16) is pressed into the connecting conduit (12), thereby effecting a seal, or is inserted into the connecting conduit (12), thereby effecting sealing through a circumferential ring seal (26).

7. A pump assembly as claimed in any one of the claims 1 to 6,
**characterized** in that the exit aperture (14) of the connecting conduit (7, 11, 8, 12, 14) is a through-bore (13) in the pump housing (1) which serves to accommodate an assembly screw (2) and extends substantially in a horizontal direction in the installation position of the pump assembly.

## Revendications

1. Ensemble de pompe, comprenant une pompe à pistons, pour système de freinage à régulation pour véhicle automobile, qui est entraînée par un moteur électrique au moyen d'un excentrique (4), tandis qu'une voie de communication (12) es prévue dans le boîtier de pompe (1) entre une chambre (7) entourant directement l'excentrique (4) et un orifice de sortie (14) qui, dans la position de montage de la pompe (1), est situé audessous de cette chambre (7), charactérisé en ce que l'orifice de sortie (14) mène à l'atmosphère libre et en ce qu'une valve antiretour (15), qui s'ouvre vers l'orifice de sortie (14), es disposée dans la voie de communication (12).

2. Ensemble de pompe selon la revendication 1, caractérisé en ce que la valve antiretour (15) est dimensionée de fraçon à s'ouvrir sous l'effect de l'effort exercé par la quantité d'agent de pression accumulée au-dessus d'un élément d'étanchéité (23) mobile, en se référant à la position de montage de la pompe (1).

3. Ensemble de pompe selon la revendication 2, caractérisé en ce qu'elle s'ouvre sous l'effet du poids présenté par la quantité d'agent de pression.

4. Ensemble de pompe selon l'une des revendications 1 à 3, caratérisé en ce que la valve antiretour (15) constitue un ensemble structurel unitaire complet qui est monté dans la voie de communication (12) et dans lequel un corps de valve (16), de préférence en matière plastique, qui est pourvu d'un bord d'étanchéité (19), porte un élément d'étanchéité (23) qui prend appui, sous une certaine précontrainte et par une surface d'étanchéité qui fait le tour, sur le bord d'étanchéite (19).

5. Ensemble de pompe selon la revendication 4, caractérisé en ce que la précontrainte est due à une mise en forme bombée de l'élément d'étanchéité (23), le plan d'appui de l'élément d'étanchéité (23) sur le bord d'étanchéité (19) étant décalé, suivant la direction de sortie de l'agent de pression, vis-à-vis de la fixation de l'anneau d'étanchéité (23) sur le corps de valve (16).

6. Ensemble de pompe selon l'une des revendications 1 à 5, caractérisé en ce que le corps de valve (16) es emboîte à force d'une manière étanche dans la voie de communication (12) ou est monté d'une manière étanche dans la voie de communication (12) par l'intermediaire d'une bague d'étanchéité (26) qui en fait le tour.

7. Ensemble de pompe selon l'une des revendications 1 à 6, caractérisé en ce que l'orifice de sortie (14) de la voie de communication (7, 11, 8, 12, 14) est constitué par un alésage traversant (13), pratiqué dans le boîtier de pompe (1), qui sert à loger une vis de fixation (2) et qui est orienté d'une manière pratiquement horizontale dans la position de montage de l'ensemble de pompe.
